# EUROPÄISCHE PATENTSCHRIFT

(11) **EP 0 733 506 B1**
(45) Veröffentlichungstag und Bekanntmachung des Hinweises auf die Patenterteilung: **20.10.1999**
(21) Anmeldenummer: 96103739.7
(22) Anmeldetag: 09.03.1996
(51) Int. Cl.: B60J 7/22

(54) **Fahrzeugdach**
Vehicle roof
Toit de voiture

(30) Priorität: 24.03.1995 DE 19510822
(43) Veröffentlichungstag der Anmeldung: 25.09.1996
(73) Patentinhaber: Dr.Ing.h.c. F. Porsche Aktiengesellschaft, 70435 Stuttgart (DE)
(72) Erfinder: Preiss, Michael, 71665 Vaihingen (DE)

(56) Entgegenhaltungen:
- EP-A- 0 362 028
- DE-A- 1 480 470
- DE-A- 2 357 906
- DE-A- 4 033 027
- DE-A- 4 203 229

## Beschreibung

Die Erfindung bezieht sich auf ein Fahrzeugdach mit einem benachbart einem Windschutzscheibenrahmen angeordneten ersten Dachabschnitt und einer an diesen anschließenden Dachöffnung gemäß dem Oberbegriff des Patentanspruchs 1.

Ein Fahrzeugdach der eingangs genannten Gattung geht aus der DE-A-42 03 229 hervor. Bei dieser Anordnung ist benachbart dem Windschutzscheibenrahmen ein um eine vordere etwa horizontale Querachse schwenkbarer erster Dachabschnitt vorgesehen, der von einer etwa bündig mit der angrenzenden Außenhaut verlaufenden ersten Betriebsstellung nach oben in eine ausgestellte zweite Betriebsstellung bewegbar ist. In der ausgestellten Betriebsstellung und einem dahinterliegenden offenen Dachabschnitt wirkt der erste Dachabschnitt als Windabweiser.

Es hat sich jedoch im Fahrbetrieb gezeigt, daß der ausgestellte erste Dachabschnitt nicht in der Lage ist, die bei geöffnetem Dach im Fahrgastraum auftretenden niedrigfrequenten, koharenten Luftschwingungen, die auch als "Wummergeräusche" bezeichnet werden, zu verhindern.

Aufgabe der Erfindung ist es, an einem benachbart dem Windschutzscheibenrahmen angeordneten ersten, ausstellbaren Dachabschnitt solche Vorkehrungen zu treffen, daß im Fahrbetrieb im Fahrgastraum die störenden pulsierenden Schwingungen - Wummergeräusche - weitgehend eliminiert werden.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordung eines zusätzlichen Luftleitelementes an der Außenseite des ersten Dachabschnittes im Fahrbetrieb und geöffnetem Fahrzeugdach im Fahrgastraum die Wummergeräusche weitgehend vermieden werden. Das Luftleitelement, auch als Zusatzspoiler bezeichnet, ist entweder einstückig mit dem ersten Dachabschnitt ausgebildet oder es wird durch ein aufgesetztes leistenförmiges, profiliertes Bauteil gebildet, das starr mit dem darunterliegenden Dachabschnitt verbunden ist.

Das Luftleitelement weist eine geringe Breite auf und ist vorzugsweise benachbart einer Mittellängsebene B-B des Fahrzeuges angeordnet. Das Luftleitelement ist kostengünstig herstellbar und weist eine gute Funktion auf.

Die Erfindung ist im folgenden anhand eines in der Zeichnung dargestellten Ausführungsbeispieles näher erläutert.
Es zeigt
- Fig. 1: eine Teilansicht von seitlich oben auf ein Fahrzeugdach eines Fahrzeuges mit einem benachbart einem Windschutzscheibenrahmen angeordneten ersten Dachabschnitt und einer nachfolgenden Dachöffnung,
- Fig. 2: eine Einzelheit X der Fig. 1 in größerem Maßstab,
- Fig. 3: einen Schnitt nach der Linie III-III der Fig. 2,
- Fig. 4: eine Ansicht in Pfeilrichtung R der Fig. 3.

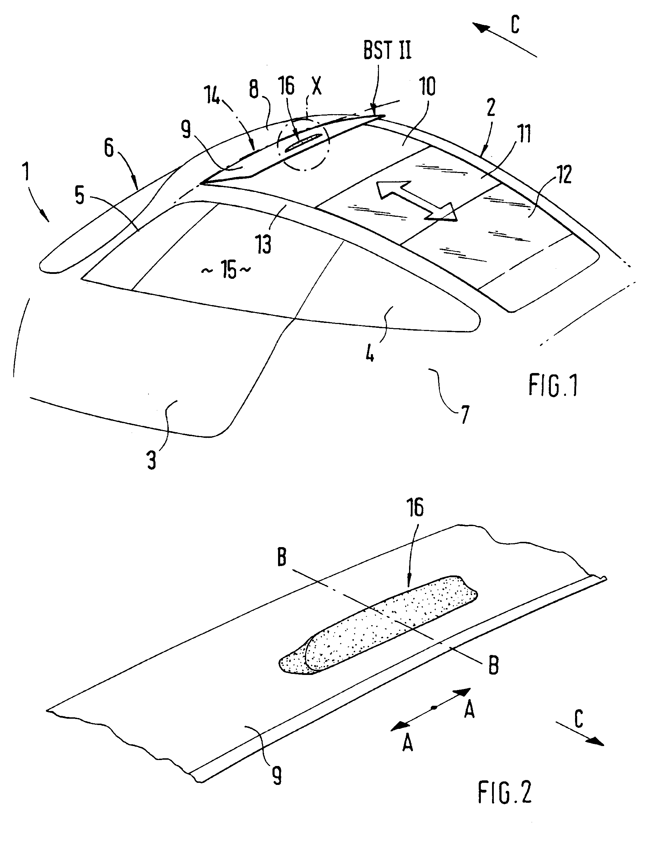

Fig. 1 zeigt einen Teilbereich eines Personenwagens 1 mit einem Fahrzeugdach 2, seitlichen Türen 3, Fondseitenfenstern 4, einer in einem Windschutzscheibenrahmen 5 gehaltenen Windschutzscheibe 6 und hinteren Seitenteilen 7.

Das Fahrzeugdach 2 umfaßt einen benachbart einem oberen querverlaufenden Abschnitt 8 des Windschutzscheibenrahmens 5 verlaufenden ersten Dachabschnitt 9 und eine an diesen anschließende Dachöffnung 10, die mittels zumindest eines weiteren Dachabschnitts verschließbar bzw. öffenbar ist.

Im Ausführungsbeispiel wird die Dachöffnung 10 von einem zweiten verschiebbaren Dachabschnitt 11 und einem dahinterliegenden dritten Dachabschnitt 12 abgedeckt, wobei der Dachabschnitt 11 über oder unter den festen hinteren Dachabschnitt 12 bewegbar ist.

Die Dachöffnung 10 wird von einem feststehenden Dachrahmen 13 begrenzt. Der Dachöffnung 10 kann auch ein herausnehmbarer Dachbschnitt oder ein Schiebedachabschnitt zugeordnet sein.

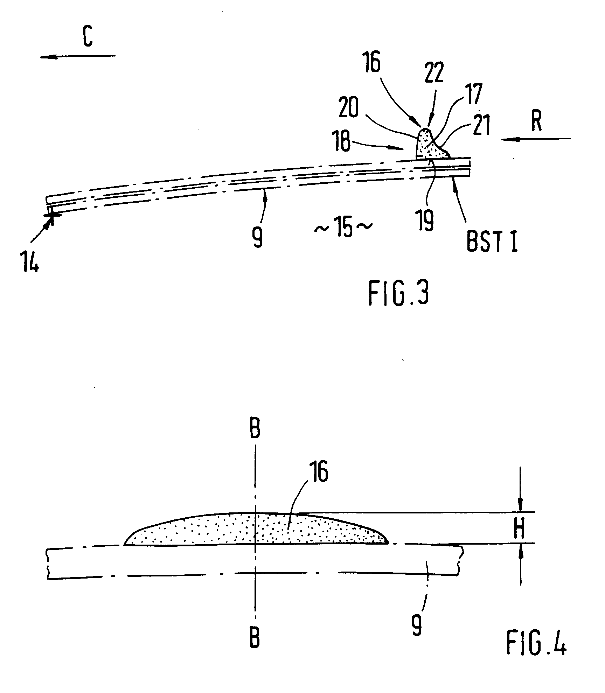

Der erste, eine relativ kurze Längserstreckung aufweisende Dachabschnitt 9 ist um eine vordere querverlaufende etwa horizontale Drehachse 14 von einer etwa außenhautbündig verlaufenden Betriebsstellung BST I in eine aufgestellte Betriebsstellung BST II verlagerbar und umgekehrt (Fig. 3).

In der aufgestellten, schräg nach oben hinten verlaufenden Betriebsstellung BST II und zumindest teilweise geöffneter Dachöffnung 10 wirkt der erste Dachabschnitt 9 als Windabweiser.

Zur Vermeidung bzw. Unterdrückung von störenden Wummergeräuschen im Fahrgastraum 15 während des Fahrbetriebes ist erfindungsgemäß an der dem Fahrgastraum 15 abgekehrten Seite des ersten Dachabschnittes 9 ein nach oben vorstehendes Luftleitelement 16 vorgesehen. Das Luftleitelement 16 ist gemäß einer ersten nicht näher dargestellten Ausführung einstückig mit dem aus Glas oder Kunststoff gefertigten ersten Dachabschnitt 9 ausgebildet; der erste Dachabschnitt 9 weist hierzu örtlich eine nach außen hin gerichtete Ausprägung bzw. Anformung auf.

Entsprechend einer weiteren Ausführungsform ist vorgesehen, daß das Luftleitelement 16 durch ein aufgesetztes, profiliertes leistenförmiges Baute 17 aus Gummi oder Kunststoff gebildet wird, das sich in Fahrzeugquerrichtung A-A erstreckt und fest mit dem darunterliegenden Dachabschnitt 9 verbunden ist (beispielsweise durch Kleben). Das Luftleitelement 16 erstreckt sich vorzugsweise benachbart einer Mittellängsebene B-B des Fahrzeuges.

Es besteht jedoch auch die Möglichkeit, anstelle eines mittig angeordneten Luftleitelementes 16 geringer Breite am ersten Dachabschnitt 9 seitlich außenliegend angeorndete Luftleitelemente 16 vorzusehen. Das Luftleitelement 16 weist eine Breite von etwa 100 ± 50 mm und eine maximale Höhe von etwa 15 ± 10 mm auf.

Im Ausführungsbeispiel weist das Luftleitelement 16 über seine Quererstreckung einen unterschiedlichen Profilverlauf auf. Die Höhe des Profils ist in der Mittellängsebene B-B am größten und fällt zu beiden Seiten hin ab (Fig. 4). Das Luftleitelement 16 kann jedoch auch einen gleichbleibenden Querschnitt entlang seiner Quererstreckung aufweisen.

Das Luftleitelement 16 ist gemäß Fig. 3 - in Fahrtrichtung C gesehen - in einem mittleren oder hintenliegenden Bereich 18 der Längserstreckung des ersten Dachabschnitts 9 vorgesehen.

Das Luftleitelement 16 ist im Querschnitt gesehen etwa dreieckförmig ausgebildet, wobei eine erste Seite 19 an der Außenseite des Dachabschnitts 9 aufliegt. Die beiden anderen Seiten 20, 21 sind an dem der ersten Seite 19 abgekehrten Ende über einen radienförmigen Übergangsbereich 22 miteinander verbunden. Die beiden anderen, sich in aufrechter Richtung erstreckenden Seiten 20, 21 sind geradlinig oder leicht gebogen (konvex oder konkav) ausgebildet.

## Patentansprüche

1. Fahrzeugdach mit einem benachbart einem Windschutzscheibenrahmen angeordneten ersten Dachabschnitt und einer an diesen anschließenden Dachöffnung, wobei der eine relativ geringe Längserstreckung aufweisende erste geschlossene Dachabschnitt von einer etwa außenhautbündig verlaufenden Betriebsstellung BST I, in der er einen Teilbereich des geschlossenen Fahrzeugdaches bildet, in eine aufgestellte als Windabweiser wirkende Betriebsstellung BST II verlagerbar ist und umgekehrt, dadurch gekennzeichnet, daß an der dem Fahrgastraum (15) abgekehrten Seite des ersten verschwenkbaren Dachabschnitts (9) zumindest ein nach oben vorstehendes profiliertes Luftleitelement (16) geringer Breite vorgesehen ist, das sich in Fahrtrichtung C gesehen in einem mittleren oder hintenliegenden Bereich der Längserstreckung des ersten Dachabschnitts (9) erstreckt.

2. Fahrzeugdach nach Anspruch 1, dadurch gekennzeichnet, daß das Luftleitelement (16) einstückig mit dem ersten Dachabschnitt (9) ausgebildet ist.

3. Fahrzeugdach nach Anspruch 1, dadurch gekennzeichnet, daß das Luftleitelement (16) durch ein aufgesetztes leistenförmiges profiliertes Bauteil (17) gebildet wird, das sich in Fahrzeugquerrichtung erstreckt und fest mit dem darunterliegenden Dachabschnitt (9) verbunden ist.

4. Fahrzeugdach nach den Ansprüchen 1 bis 3, dadurch gekennzeichnet, daß sich das Luftleitelement (16) vorzugsweise benachbart einer Mittellängsebene (B-B) des Fahrzeugdaches erstreckt.

5. Fahrzeugdach nach den Ansprüchen 1 bis 4, dadurch gekennzeichnet, daß das Luftleitelement (16) eine Breite von etwa 100 ± 50 mm aufweist.

6. Fahrzeugdach nach den Ansprüchen 1 bis 4, dadurch gekennzeichnet, daß das Luftleitelement (16) eine maximale Höhe von etwa 15 ± 10 mm aufweist.

7. Fahrzeugdach nach Anspruch 1, dadurch gekennzeichnet, daß das Luftleitelement (16) - in Längsrichtung gesehen - in einem mittleren oder hinteren Bereich (18) der Längserstreckung des ersten Dachabschnitts (9) angebracht ist.

## Claims

1. A vehicle roof with a first portion arranged adjacent to a windscreen frame and an opening adjoining the said roof portion, wherein the first closed roof portion having a relatively short longitudinal extension is displaceable from an operating position **BST I** -which extends substantially flush with the outer skin and in which the said first roof portion forms a partial area of the closed vehicle roof - into a raised operating position **BST II** - acting as a wind deflector - and *vice versa*, **characterized in that** at least one upwardly projecting profiled spoiler member (16) of narrow width is provided on the side of the first pivotable roof portion (9) remote from the passenger compartment (15), and it extends - as viewed in the direction of travel **C** - in a central or rear area of the longitudinal extension of the first roof portion (9).

2. A vehicle roof according to Claim 1, **characterized in that** the spoiler member (16) is constructed integrally with the first roof portion (9).

3. A vehicle roof according to Claim 1, **characterized in that** the spoiler member (16) is formed by an attached strip-shaped profiled structural part (17) extending in the transverse direction of the vehicle and rigidly connected to the roof portion (9) situated there-under.

4. A vehicle roof according to Claims 1 to 3, **characterized in that** the spoiler member (16) extends preferably adjacent to a median longitudinal plane (**B-B**) of the vehicle roof.

5. A vehicle roof according to Claims 1 to 4, **characterized in that** the spoiler member (16) has a width of substantially 100 ± 50 mm.

6. A vehicle roof according to Claims 1 to 4, **characterized in that** the spoiler member (16) has a maximum height of substantially 15 ± 10 mm.

7. A vehicle roof according to Claim 1, **characterized in that** the spoiler member (16) is attached - as viewed in the longitudinal direction - in a central or rear area (18) of the longitudinal extension of the first roof portion (9).

## Revendications

1. Toit de véhicule présentant une première partie disposée au voisinage d'un cadre de pare-brise ainsi qu'une ouverture faisant suite à cette partie, la première partie de toit fermée présentant une étendue longitudinale relativement réduite et étant déplaçable d'une position de service (BST I) à peu près à fleur de l'enveloppe extérieure, position dans laquelle elle forme une zone partielle du toit fermé du véhicule, à une position de service (BST II) dressée, servant de déflecteur de vent, et inversement, caractérisé en ce que sur le côté, tourné à l'opposé de l'habitacle (15), de la première partie de toit (9), qui peut pivoter, il est prévu au moins un élément de guidage d'air (16) profilé, faisant saillie vers le haut, de largeur réduite, qui, vu dans le sens de marche (C), s'étend dans une zone centrale ou arrière de l'étendue longitudinale de la première partie de toit (9).

2. Toit de véhicule selon la revendication 1, caractérisé en ce que l'élément de guidage d'air (16) est réalisé d'un seul tenant avec la première partie de toit (9).

3. Toit de véhicule selon la revendication 1, caractérisé en ce que l'élément de guidage d'air (16) est formé par une pièce rapportée (17) profilée en forme de baguette, qui s'étend dans la direction transversale au véhicule et qui est fixée rigidement à la partie de toit (9) située au-dessous.

4. Toit de véhicule selon les revendications 1 à 3, caractérisé en ce que l'élément de guidage d'air (16) s'étend de préférence au voisinage d'un plan médian longitudinal (B-B) du toit du véhicule.

5. Toit de véhicule selon les revendication 1 à 4, caractérisé en ce que l'élément de guidage d'air (16) présente une largeur d'environ 100 ± 50 mm.

6. Toit de véhicule selon les revendications 1 à 4, caractérisé en ce que l'élément de guidage d'air (16) présente une hauteur maximale d'environ 15 ± 10 mm.

7. Toit de véhicule selon la revendication 1, caractérisé en ce que l'élément de guidage d'air (16) - vu dans la direction longitudinale - est placé dans une zone (18) centrale ou arrière de l'étendue longitudinale de la première partie de toit (9).
